# EUROPÄISCHE PATENTANMELDUNG

(11) **EP 4 628 331 A1**
(43) Veröffentlichungstag der Anmeldung: **08.10.2025**
(21) Anmeldenummer: 25170098.5
(22) Anmeldetag: 11.04.2025
(51) Int. Cl.: B60D 1/48, B60R 19/34, B60D 1/56, B60R 19/02

(54) **STOSSFÄNGERANORDNUNG MIT ABSCHLEPPÖSE**

(71) Anmelder: Benteler Automobiltechnik GmbH, 33102 Paderborn (DE)
(72) Erfinder: Peters, Britta, 33102 Paderborn (DE)
(74) Vertreter: Osterhoff, Utz

(57) **Zusammenfassung**

Die Erfindung betrifft eine Stoßfängeranordnung (1) für ein Kraftfahrzeug, aufweisende einen Querträger (2), welcher über Crashboxen (3) an das Kraftfahrzeug gekoppelt ist, wobei der Querträger (2) im Querschnitt als geschlossenes Hohlprofil ausgebildet ist, und den Querträger (2) durchgreifend eine Hülse (5) zur Aufnahme einer Abschleppöse angeordnet ist, dadurch gekennzeichnet, dass eine Vorderseite (7) des Querträgers (2) und eine Rückseite (10) des Querträgers (2) im Bereich der Hülse (5) verprägt sind, dergestalt, dass in der Vorderseite (7) eine vordere Aufnahmeebene und in der Rückseite (10) eine hintere Aufnahmeebene ausgebildet sind, wobei die Ebenen parallel zueinander versetzt angeordnet sind und insbesondere in einer Ebene orientiert verlaufen, parallel zur Kraftfahrzeugvertikalrichtung (Z) und Kraftfahrzeugquerrichtung (Y).

## Beschreibung

Die vorliegende Erfindung betrifft eine Stoßfängeranordnung gemäß den Merkmalen im Oberbegriff von Anspruch 1.

Aus dem Stand der Technik ist bekannt, für Kraftfahrzeuge Stoßfängeranordnungen einzusetzen. Bei den Kraftfahrzeugen kann es sich um ein Elektrokraftfahrzeug handeln oder auch um ein Kraftfahrzeug, das mit einem verbrennungsmotorischen Antrieb ausgestattet ist. Auch kann ein Hybridfahrzeug verwendet werden.

Die Stoßfängeranordnung weist einen Querträger auf. Der Querträger erstreckt sich dabei im Wesentlichen über die Kraftfahrzeugbreite. Der Querträger weist insbesondere eine Krümmung um die Kraftfahrzeugvertikalrichtung auf. Zumeist ist ein solcher Stoßfänger über Crashboxen an dem Kraftfahrzeug, insbesondere Längsträgern des Kraftfahrzeuges gekoppelt.

Im Falle einer Fahrzeugpanne, jedoch auch beispielsweise bei Überseetransporten wird in ein Kraftfahrzeug eine Abschleppöse eingesetzt. Eine solche Abschleppöse muss an dem Kraftfahrzeug befestigt sein, da sie bei Nichtgebrauch, beispielsweise im Kofferraum des Kraftfahrzeuges gelagert ist.

Hierzu ist es bekannt, dass eine hülsenförmige Aufnahme zumeist mit einem Steckverschluss oder einem Innengewinde vorhanden ist. Die Abschleppöse wird dann mit einem stegförmigen bzw. bolzenförmigen Fortsatz in die Hülse eingesteckt oder eingeschraubt. Im Anschluss daran kann dann eine entsprechende Kraft übertragen werden. Beispielsweise kann das Kraftfahrzeug abgeschleppt werden, in dem eine Zugkraft über die Abschleppöse übertragen wird. Auch kann das Kraftfahrzeug an einem Boden verzurrt werden, in dem ein entsprechendes Zurrmittel, beispielsweise ein Zurrgurt, von der Abschleppöse schräg nach unten verzurrt wird.

Es ist bekannt, entsprechende Hülsen an einem Stoßfängerquerträger zu befestigen.

Aufgabe der vorliegenden Erfindung ist es, eine Möglichkeit aufzuzeigen, eine solche Hülse präzise, großserientauglich und konstruktiv kostengünstig bei verbesserter Kraftübertragung an einer Stoßfängeranordnung zu befestigen.

Die zuvor genannte Aufgabe wird erfindungsgemäß mit dem Merkmal im Anspruch 1 gelöst.

Vorteilhafte Ausgestaltungsvarianten der Erfindung sind in den abhängigen Ansprüchen beschrieben.

Die Stoßfängeranordnung ist für ein Kraftfahrzeug geeignet. Sie weist einen Querträger auf, welcher über Crashboxen an dem Kraftfahrzeug gekoppelt.

Der Querträger selbst weist dabei einen gekrümmten bzw. bogenförmigen Verlauf auf. Die Krümmung ist um die Kraftfahrzeugvertikalrichtung gebogen ausgeführt. Die Krümmung weist einen sich verändernden Krümmungsradius auf. Insbesondere ist der Querträger in einem mittleren Bereich weniger stark gekrümmt und in den Endbereichen stärker gekrümmt.

An dem Querträger selbst sind Crashboxen gekoppelt. Der Querträger ist insbesondere aus einem Stahlwerkstoff ausgebildet. Der Querträger bzw. ein Profil, insbesondere Hutprofil des Querträgers kann beispielsweise aus einem warmumgeformten und pressgehärteten Kohlenstoffstahl hergestellt sein. Insbesondere weist dieser eine Zugfestigkeit Rm größer 1350 MPa auf.

Der Querträger selbst weist in seinem Querschnitt ein geschlossenes Hohlprofil auf. In bevorzugter Ausgestaltungsvariante ist dieses Hohlprofil durch ein Hutprofil gebildet. Die Öffnung des Hutprofils zeigt auf die Kraftfahrzeuglängsrichtung bezogen, bevorzugt nach vorne. Das Hutprofil ist dann mit einem Schließblech gekoppelt. Das Schließblech erstreckt sich in Kraftfahrzeugquerrichtung über einen Großteil der Breite bzw. Länge des Querträgers. Insbesondere erstreckt sich das Schließblech über die gesamte Breite bzw. Länge des Querträgers. Das Schließblech selbst kann aus einem Stahl ausgebildet sein, der eine Zugfestigkeit Rm von größer 500 MPa und kleiner 1200 MPa aufweist, insbesondere zwischen 500 MPa und 800 MPa. Dies hätte den Vorteil, dass das Schließblech selbst duktil ausgebildet ist. Der Querträger hat somit durch das Hutprofil eine hohe Eigensteifigkeit, durch das Schließblech jedoch eine entsprechende Dehnfähigkeit, so dass beim Poltest der Querträger nicht einknicken oder reißen würde.

Nunmehr ist den Querträger durchgreifend, eine Hülse zur Aufnahme einer Abschleppöse angeordnet. Die Hülse selbst ist bevorzugt auch aus einem Stahlwerkstoff hergestellt. In der Hülse kann beispielsweise ein Innengewinde ausgebildet sein, so dass eine Abschleppöse mit ihrem stegförmigen bzw. bolzenförmigen Fortsatz in die Hülse eingeschraubt wird.

Erfindungsgemäß ist nunmehr vorgesehen, dass eine Vorderseite des Querträgers und optional eine Rückseite des Querträgers in dem Bereich der Hülse verprägt sind. Verprägt im Sinne dieser Erfindung heißt, dass ein Bereich gezielt umgeformt ist. Insbesondere als Biegeumform bzw. Prägeumform, was in dem Sinne der Erfindung verprägt genannt wird. Die Verprägung kann mit dem eigentlichen Umformvorgang des Querträgers stattfinden. Die Verprägung kann jedoch auch im Anschluss an den eigentlichen Umformvorgang des Querträgers stattfinden, sodass nochmals der Bereich bzw. die Aufnahme verprägt wird. Der Bereich ist ein Aufnahmebereich. Im Bereich der Vorderseite und im Bereich der Rückseite des Querträgers ist jeweils eine Öffnung, insbesondere ein Loch ausgebildet. Diese Öffnung oder Loch kann insbesondere ein kreisrunder Ausschnitt sein. Die Hülse ist dann in das jeweilige Loch bzw. den Ausschnitt durchgreifend eingesetzt und somit die Vorderseite und die Rückseite durchgreifend eingesetzt.

Der Bereich in der Vorderwand und auch optional der Bereich in der Rückwand sind dann bevorzugt als Aufnahmeebene ausgebildet. Dies bedeutet, dass diese Aufnahmeebene in sich plan ist. Hier ist also keine Krümmung oder ähnliches ausgebildet. Die plane Ebene ist weiterhin besonders bevorzugt derart ausgebildet, dass bei eingesetzter Hülse umlaufend um die Außenmantelfläche ein Abstand von mindestens 3 mm, bevorzugt bis zu 20 mm, ganz besonders bevorzugt zwischen 4 mm und 10 mm ausgebildet ist. Somit kann umlaufend die Außenmantelfläche der Hülse mit der Aufnahmeebene verschweißt werden. In Draufsicht bzw. Stirnansicht kann die Aufnahmeebene selbst kreisrund ausgebildet sein. Die Aufnahmeebene kann jedoch auch eckig oder viereckig ausgebildet sein in Stirnansicht. Mindestens ist jedoch überall ein Abstand ausgebildet in den vorgenannten Millimeterangaben von besonders bevorzugt 4 mm bis 10 mm.

Damit die Hülse optimal eine Zugkraft in Kraftfahrzeuglängsrichtung übertragen kann, ist die Hülse an einem fahrzeugseitigen Ende mit einem Stufenabsatz versehen. Der Stufenabsatz bezieht sich auf die Radialrichtung der Hülse nach außen hin. Mithin weist die Hülse im fahrzeugseitigen Ende eine Verdickung bzw. einen Wulst auf. Diese Verdickung bzw. Wulst bzw. Stufenabsatz liegt dann an der Rückseite des Querträgers an. Hierdurch wird die Kraftübertragung in Kraftfahrzeuglängsrichtung, insbesondere bei einer Zugkraftbeanspruchung über die Abschleppöse optimiert geleitet.

Damit nunmehr die Montage und Ausrichtung der Hülse zur Aufnahme der Abschleppöse verbessert ist, sind, wie bereits erwähnt, die Rückseite und die Vorderseite des Querträgers in dem Aufnahmebereich der Hülse verprägt. Hierdurch ergibt sich eine vordere Aufnahmeebene und optional an der Rückseite des Querträgers eine hintere Aufnahmeebene. Die beiden Aufnahmeebenen von Vorderseite und Rückseite sind insbesondere parallel zueinander versetzt angeordnet. In besonders bevorzugter Ausgestaltungsvariante liegen beiden Ebenen parallel versetzt bzw. verlaufen orientiert zu einer Ebene die parallel zu der Ebene ausgebildet ist, die durch die Kraftfahrzeugvertikalrichtung und Kraftfahrzeugquerrichtung aufgespannt ist. Auch können die Aufnahmeebene an der Vorderseite bzw. an der Rückseite in einem Winkel von maximal ± 5° zu der Ebene aufgespannt durch die Kraftfahrzeugvertikalrichtung und Kraftfahrzeugquerrichtung verlaufen.

Dies bietet insbesondere zwei Vorteile. Zum einen ist die Orientierung bzw. geometrische Präzision beim Einsetzen der Hülse, also bei der Erstmontage der Stoßfängeranordnung, beispielsweise als Schweißzusammenbauteil oder ähnliches, verbessert.

Bei Einsatz der Abschleppöse, das heißt bei Kraftübertragung, hat sich erfindungsgemäß herausgestellt, dass bei einer entsprechenden Aufnahmeebene an der Vorderseite und der Rückseite eine verbesserte Kraftübertragung stattfindet. In weiterer bevorzugter Ausgestaltungsvariante ist zumindest abschnittsweise, insbesondere vollständig umlaufend die Hülse mit der Vorderseite, mithin mit dem Schließblech, jedoch auch mit der Rückseite des Querträgers verschweißt. Die Verschweißung kann ebenfalls in der Ausführung der Schweißnaht, jedoch auch in der damit zu erreichenden Qualität der Schweißnaht durch die parallel zueinander angeordneten Ebenen ausgeführt werden. Ebenfalls ergibt sich ein im Wesentlichen rechter Winkel zwischen der Außenmantelfläche der Hülse und der jeweiligen Aufnahmeebene. Dies verbessert wiederum die Schweißnahtqualität sowie die durch die Schweißnaht zu übertragenden Kräfte.

Insbesondere ist dazu an der vorderen Aufnahmeebene bezogen auf die Kraftfahrzeugquerrichtung innen, ein Bereich der Vorderseite des Querträgers nach hinten abgebogen. Ein Bereich der auf die Kraftfahrzeugquerrichtung außen liegt, ist auf die Längsrichtung bezogen nach vorne umgebogen. Hierdurch ergibt sich dann die vordere Ebene bzw. Aufnahmeebene im Bereich der Vorderseite bzw. Vorderwand des Querträgers. Diese Aufnahmeebene ist, zumindest teilweise gegenüber der Vorderwand auf die Kraftfahrzeuglängsrichtung bezogen, zurückversetzt. Dies bietet wiederum den Vorteil, dass ein Ende der Hülse, mithin eine Stirnseite der Hülse, gegenüber dieser Aufnahmeebene in Kraftfahrzeuglängsrichtung übersteht. Dies ist wichtig, so dass die Stirnseite beabstandet ist von einer Verschweißung der Außenmantelfläche der Hülse mit der Vorderwand bzw. Vorderseite des Querträgers. Dadurch, dass jedoch die Aufnahmeebene zumindest teilweise gegenüber der Vorderwand in Längsrichtung zurückversetzt ist, ist der sich ergebene absolute Überstand der Stirnwand der Hülse reduziert. Insbesondere steht die Hülse nicht soweit über, im Vergleich zu einer gekrümmten, jedoch durchgehend verlaufenden Vorderwand. Die Hülse ist somit in Längsrichtung relativ gesehen zurückversetzt ohne Einschränkungen hinsichtlich der Brauchbarkeit der Hülse. Insbesondere ist es wichtig, dass die Stirnwand beabstandet ist zur Schweißnaht zwischen Hülse und Vorderwand, insbesondere derart beabstandet, dass diese in Kraftfahrzeuglängsrichtung übersteht. Die Stirnwand der Hülse steht bevorzugt zwischen 6 mm und 20 mm, besonders bevorzugt zwischen 7 mm und 15 mm und insbesondere von 8 mm bis 10 mm gegenüber der Aufnahmeebene über.

Der Bereich, insbesondere der Aufnahmebereich in der vorderen Aufnahmeebene und/oder der Bereich, insbesondere der Aufnahmebereich in der hinteren Aufnahmeebene, ist in einer jeweiligen Draufsicht rund ausgebildet. Draufsicht bedeutet in diesem Falle eine Stirnansicht an dem Stoßfängerquerträger von vorne bzw. von hinten in Kraftfahrzeuglängsrichtung und würde den Bereich zur Aufnahme der Hülse im Wesentlichen rund aussehen lassen.

Für die Verprägung des jeweiligen Bereiches bedeutet bei gekrümmtem Verlauf des Querträgers es, dass ein auf die Kraftfahrzeugquerrichtung bezogener innerer Teil des Bereiches der Vorderseite in Richtung des Querträgers hineinverprägt ist. Ein auf die Kraftfahrzeugquerrichtung bezogen äußerer Teil des Bereiches an der Vorderseite ist auf die Kraftfahrzeuglängsrichtung bezogen nach außen verprägt. An der Rückseite ist dann ein auf die Kraftfahrzeugquerrichtung bezogener innerer Teil des Bereiches auf die Kraftfahrzeuglängsrichtung bezogen nach hinten, also nach außen von dem Querträger, verprägt. Ein auf die Kraftfahrzeugquerrichtung bezogen äußerer Bereich an der Rückseite des Querträgers ist dann insbesondere nach innen, also in einen Innenraum des Querträgers, verprägt.

Der Bereich zur Aufnahme der Hülse ist größer ausgebildet als nur die Öffnung bzw. das Loch zum Durchgreifen der Hülse. Dies liegt darin begründet, dass eine Verschweißung stattfindet. Hierzu ist insbesondere von einer Innenseite der Öffnung bzw. des Loches zur Hülse der Bereich mindestens umlaufend 1,5mal der Wanddicke, bevorzugt 2,5mal bis 8mal der Wanddicke größer ausgebildet. Dies bedeutet, dass ein Durchmesser des Bereiches sich zusammensetzt aus dem Durchmesser bzw. Außendurchmesser der Hülse plus 3mal bis 16mal, bevorzugt 4mal bis 10mal der Wanddicke der Vorderwand bzw. der Rückwand.

Damit die Hülse besonders einfach zunächst eingesetzt werden kann, ist insbesondere eine Spielpassung zwischen der Öffnung an der Rückseite und/oder Vorderseite und der Hülse ausgebildet. Der Wulst bzw. der Stufenabsatz hintergreift dann bei vollständig eingesteckter Hülse die Rückwand.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Die zuvorgenannten und nachfolgend beschriebenen einzelnen Merkmale können untereinander beliebig kombiniert werden, ohne dabei den Rahmen der Erfindung zu verlassen. Es zeigen:
- Figur 1: eine perspektivische Ansicht einer Stoßfängeranordnung,
- Figur 2: eine Stirnansicht auf den Querträger bzw. die Vorderseite des Querträgers,
- Figur 3: eine Längsschnittansicht gemäß der Schnittlinie III-III aus Figur 2,
- Figur 4: die Hülse nochmals in einer Längsschnittansicht,
- Figur 5: eine Längsschnittansicht durch eine Crashbox und
- Figur 6: eine Längsschnittansicht, schematisch vereinfacht mit Querträger und eingesetzter Hülse

In den Figuren werden für gleiche oder ähnliche Bauteile dieselben Bezugszeichen verwendet, auch wenn eine wiederholte Darstellung oder Aufzählung entfällt.

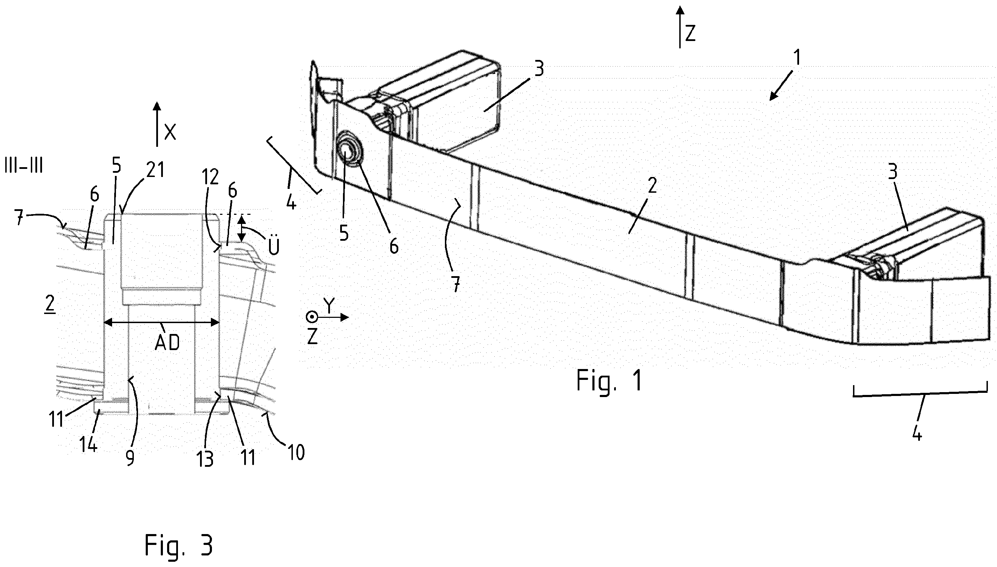

Figur 1 zeigt eine perspektivische Ansicht einer Stoßfängeranordnung 1. Diese weist einen Querträger 2 auf. Der Querträger 2 ist jeweils mit Crashboxen 3 gekoppelt. Die

Endbereiche 4 des Querträgers 2 weisen eine stärkere Krümmung um die Kraftfahrzeugvertikalrichtung Z auf. Im Bereich der auf die Bildebene bezogen linken Crashbox 3 ist eine Hülse 5 angeordnet, um eine nicht näher dargestellte Abschleppöse einzusetzen. Durch einen verprägten Bereich der Vorderseite des Querträgers 2 bzw. Schließblechs, welcher einen vorderen Aufnahmebereich der Hülse 5 bildet, wird die Hülse 5 radial umrandet.

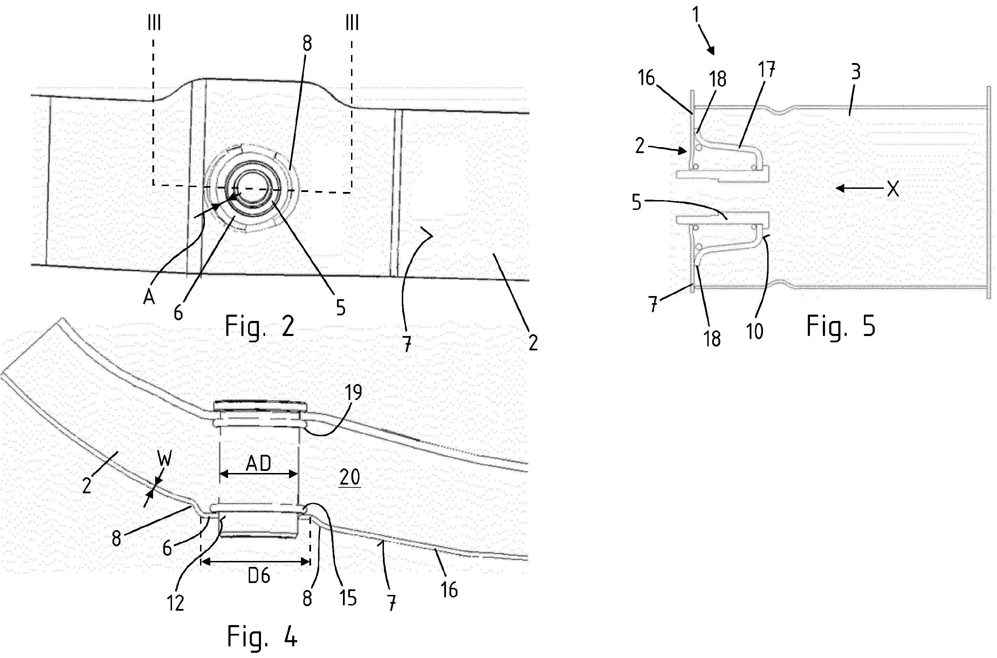

Figur 2 zeigt dazu eine Stirnansicht auf den Querträger 2 bzw. die Vorderseite 7 des Querträgers 2. Die Hülse 5 ist hier angeordnet und ein unmittelbar die Hülse 5 umgebender Bereich 6 ist in dieser Stirnansicht bzw. Frontansicht rund ausgebildet. Dieser Bereich 6 ist gegenüber dem Rest der Vorderseite verprägt, dies bedeutet in einem Umformprozess entsprechend anders ausgebildet worden. Es ergibt sich dann noch ein um den Bereich umrandenden Radiusbereich bzw. Übergangsradius 8. Dieser ist nicht in Stirnansicht rund ausgebildet, da er sich an die Krümmung der Vorderseite 7 bzw. Schließblechs angleicht, um einen Übergang zur Vorderseite 7 bereitzustellen. Ferner dargestellt in Figur 2 ist ein Abstand A. Von einer Außenmantelfläche der Hülse 5 beträgt der Abstand A bevorzugt mindestens 3 mm, ganz besonders bevorzugt mindestens 4 mm und weiterhin bevorzugt höchstens 10 mm. Der Abstand A ist umlaufend ausgebildet. Der Abstand A definiert somit den Bereich 6, welcher eben bzw. plan ausgebildet ist. Somit kann eine nicht näher dargestellte Schweißnaht umlaufend ausgebildet werden. Die Schweißnaht liegt dann an der Außenmantelfläche der Hülse 5 und in dem Bereich 6 als plane Aufnahmeebene an. Die Qualität der Schweißverbindung ist durch die geometrische Ausgestaltung hoch.

Besonders bevorzugt ist der Bereich 6 der Aufnahmeebene rechtwinklig zu einer Mittellängsachse der Hülse 5 angeordnet.

Figur 3 zeigt nunmehr eine Längsschnittansicht gemäß der Schnittlinie III-III aus Figur 2. Die Hülse 5 selbst weist ein nicht näher dargestelltes Innengewinde 9 auf. Gegenüber einer Vorderseite 7 sowie hier dargestellten Rückseite 10 ist jeweils ein Bereich 6 in der Vorderseite 7 verprägt sowie ein Bereich 11 in der Rückseite 10 verprägt. Der Bereich 6 in der Vorderseite 7 und der Bereich 11 in der Rückseite 10 kann auch jeweils Aufnahmebereich genannt werden. Der Bereich 6 der Vorderseite 7 und der Bereich 11 der Rückseite 10 sind zueinander parallel versetzt. Insbesondere zu einer in Kraftfahrzeugquerrichtung Y sowie Kraftfahrzeugvertikalrichtung Z aufgespannten Ebene sind jeweils die Bereiche 6, 11 parallel ausgebildet. Dies bedeutet, der Rest des Querträgers 2 verläuft, mithin die Vorderseite 7 und die Rückseite 10 des Querträgers 2, in einer Krümmung um die Vertikalrichtung Z. Der Bereich 6 und der Bereich 11 sind dazu in sich plan ausgebildet und parallel zumindest beabstandet oder mit einem Winkel maximal um jeweils ± 5° zueinander angeordnet und sind vorzugsweise parallel orientiert oder maximal um jeweils ± 5° versetzt zu einer Ebene aufgespannt durch die Kraftfahrzeugquerrichtung Y und Kraftfahrzeugvertikalrichtung Z. Eine vordere Stirnwand 21 der Hülse 5 steht in Kraftfahrzeuglängsrichtung X gegenüber der Ebene 6 nach vorne über. Somit ist eine nicht näher dargestellte umlaufende Verschweißung der Ebene 6 mit der Außenmantelfläche der Hülse 5 beabstandet von der Stirnwand 21 der Hülse 5. Gleichzeitig ist jedoch das absolute Überstehen der Stirnwand 21 der Hülse 5 gegenüber der Vorderseite 7 des Querträgers 2 reduziert für den vergleichenden Fall, dass nicht die Ebene 6 in der Vorderseite 7 des Querträgers 2 verprägt wäre.

Ferner ist in Figur 3 ein Überstand Ü dargestellt. Mit diesem steht die Stirnseite 21 der Hülse 5 gegenüber dem Bereich 6 über. Der Bereich 6 kann auch als Ebene bzw. Aufnahmeebene bezeichnet sein.

Der Bereich 6 weist eine Öffnung 12 auf und der Bereich 11 eine Öffnung 13. Durch diese ist die Hülse 5 hindurchgesteckt. Die Hülse 5 weist über ihren Längsverlauf einen konstanten Außendurchmesser AD auf. An einem fahrzeugseitigen Ende der Hülse 5, mithin auf die Bildebene bezogen unten dargestellt, weist die Hülse 5 einen Stufenabsatz 14 auf. Der Stufenabsatz 14 kann auch als Wulst ausgebildet sein. Der Stufenabsatz 14 steht in Radialrichtung der Hülse 5 gegenüber dem Außendurchmesser über. Der Stufenabsatz 14 kommt somit formschlüssig an der Rückseite 10 des Querträgers 2 zur Anlage und erlaubt einen gewissen Toleranzspielraum beim Verschweißen am Querträger 2. Eine in Kraftfahrzeuglängsrichtung X nicht näher dargestellte Zugkraft wird somit optimal übertragen.

Ferner dargestellt ist die Hülse 5 nochmals in einer Längsschnittansicht in Figur 4. Hier ist dargestellt, dass gegenüber der Vorderseite 7 des Querträgers 2, hier insbesondere einem entsprechenden Schließblech 16 und ein optionaler Dichtring 15 ausgebildet ist. Diese kann an der Innenseite der Vorderseite 7 ausgebildet sein. Die Vorderseite 7 ist hier insbesondere durch ein Schließblech 16 ausbildet. Dies ist auch nochmals in Figur 5 dargestellt, welche eine Längsschnittansicht durch eine Crashbox 3 zeigt. Der Querträger 2 selbst ist dann durch ein entsprechendes Hutprofil 17 ausgebildet. Die Öffnung des Hutprofils 17 gemäß Figur 5 zeigt in Kraftfahrzeuglängsrichtung X nach vorne bzw. von dem Fahrzeug weg. Das Schließblech 16 ist mit dem Hutprofil 17 nicht näher dargestellt über die Flansche 18 des Hutprofils 17 gekoppelt, durch einen Schweißprozess. Ferner ist an einer Rückseite 10 des Querträgers 2, hier des Hutprofils 17, ebenfalls die Hülse 5 mit diesem verschweißt.

Ferner weist gemäß Figur 4 der vordere Bereich 6 einen Durchmesser D6 auf, der sich zusammensetzt aus dem Außendurchmesser der Hülse 5 plus mindestens 3mal der Wandstärke, bevorzugt bis zu 16mal der Wandstärke des Bauteils, hier des Schließbleches 16. Dies bedeutet radial umlaufend um die Öffnung des Schließbleches 16 ist der Bereich mindestens 1,5mal der Wandstärke größer ausgebildet als die Öffnung selber.

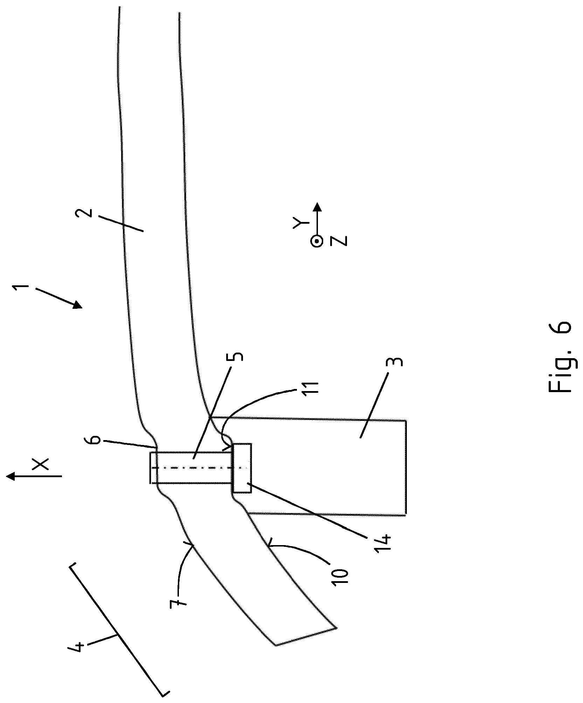

Figur 6 zeigt eine Längsschnittansicht, schematisch vereinfacht mit Querträger 2 und eingesetzter Hülse 5. Diese ist derart eingesetzt, dass sie an einer Rückseite 10 des Querträgers 2 anliegt und die Rückseite 10 und die Vorderseite 7 des Querträgers 2 jeweils vollständig durchgreift. Entsprechende Schweißnähte 16 können eingesetzt werden. Der Querträger 2 selbst weist eine Krümmung um die Kraftfahrzeugvertikalrichtung Z auf. Die Krümmung um die Kraftfahrzeugvertikalrichtung Z ist in den Endbereichen des Querträgers 2 stärker ausgebildet. Der Bereich 6 und der Bereich 11 sind zueinander parallel versetzt oder maximal um jeweils ± 5° in einem Winkel angeordnet. Jedoch sind der Bereich 6 und der Bereich 11 auch parallel versetzt oder um maximal ± 5° in einem Winkel angeordnet durch einen Ebene ausgebildet durch die Kraftfahrzeugquerrichtung Y und Kraftfahrzeugvertikalrichtung Z.

### Bezugszeichen:

- 1 -: Stoßfängeranordnung
- 2 -: Querträger
- 3 -: Crashbox
- 4 -: Endbereich
- 5 -: Hülse
- 6 -: Bereich zu 7
- 7 -: Vorderseite
- 8 -: Radiusbereich bzw. Übergangsbereich
- 9 -: Innengewinde
- 10 -: Rückseite
- 11 -: Bereich z. 10
- 12 -: Öffnung z. 6
- 13 -: Öffnung z. 11
- 14 -: Stufenabsatz
- 15 -: Dichtring
- 16 -: Schließblech
- 17 -: Hutprofil
- 18 -: Flansch z. 17
- 19 -: Dichtring
- 20 -: Innenbereich/Innenraum z. 2
- 21 -: Stirnwand zu 5

- A -: Abstand
- AD -: Außendurchmesser zu 5
- D6 -: Durchmesser z. 6
- Ü -: Überstand
- W -: Wandstärke
- X -: Kraftfahrzeuglängsrichtung
- Y -: Kraftfahrzeugquerrichtung
- Z -: Kraftfahrzeugvertikalrichtung

## Patentansprüche

1. Stoßfängeranordnung (1) für ein Kraftfahrzeug, aufweisend einen Querträger (2), welcher über Crashboxen (3) an das Kraftfahrzeug gekoppelt ist, wobei der Querträger (2) im Querschnitt als geschlossenes Hohlprofil ausgebildet ist, und den Querträger (2) durchgreifend eine Hülse (5) zur Aufnahme einer Abschleppöse angeordnet ist, **dadurch gekennzeichnet, dass** eine Vorderseite (7) des Querträgers (2) und optional eine Rückseite (10) des Querträgers (2) im Bereich der Hülse (5) verprägt ist/sind, dergestalt, dass in der Vorderseite (7) eine vordere Aufnahmeebene und optional in der Rückseite (10) eine hintere Aufnahmeebene ausgebildet ist/sind, wobei zumindest die vordere Aufnahmeebene parallel oder jeweils in einem Winkel von maximal ± 5° zu einer Ebene aufgespannt durch Kraftfahrzeugvertikalrichtung (Z) und Kraftfahrzeugquerrichtung (Y) verläuft.

2. Stoßfängeranordnung (1) nach Anspruch 1, **dadurch gekennzeichnet, dass** der Querträger (2) um die Kraftfahrzeugvertikalachse (Z) gekrümmt verläuft.

3. Stoßfängeranordnung (1) nach Anspruch 1 oder 2, **dadurch gekennzeichnet, dass** der Querträger (2) aus einem Hutprofil (17) mit einem Schließblech (16) ausgebildet ist/sind.

4. Stoßfängeranordnung nach einem der vorgenannten Ansprüche, **dadurch gekennzeichnet, dass** der Bereich (6) der vorderen Aufnahmeebene und/oder der Bereich (11) der hinteren Aufnahmeebene in Frontansicht auf die Stoßfängeranordnung rund ausgebildet ist.

5. Stoßfängeranordnung (1) nach einem der vorgenannten Ansprüche, **dadurch gekennzeichnet, dass** der verprägte Bereich einen Durchmesser aufweist, welcher sich zusammensetzt aus einem Außendurchmesser (AD) der Hülse (5) plus 3mal bis 16mal der Wanddicke der Vorderwand und/oder der Rückwand.

6. Stoßfängeranordnung (1) nach einem der vorgenannten Ansprüche, **dadurch gekennzeichnet, dass** die Hülse (5) einen Außendurchmesser (AD) aufweist, welcher über den Verlauf der Hülse (5) und zumindest an demjenigen Ende der Hülse (5), welche mit dem vorderen Anbindungsbereich verschweißt ist, konstant ausgebildet ist.

7. Stoßfängeranordnung (1) nach einem der vorgenannten Ansprüche, **dadurch gekennzeichnet, dass** die Hülse (5) an einem fahrzeugseitigen Ende einen Stufenabsatz (14) aufweist, welcher größer ist als der Außendurchmesser der Hülse (5).

8. Stoßfängeranordnung (1) nach einem der vorgenannten Ansprüche, **dadurch gekennzeichnet, dass** die Hülse (5) mit der Vorderwand und/oder der Rückwand des Querträgers (2) radial umlaufend zumindest abschnittsweise, insbesondere mindestens ¾ des Außenumfangs bzw. Außendurchmessers (AD) der Hülse (5) verschweißt ist.

9. Stoßfängeranordnung (1) nach einem der vorgenannten Ansprüche, **dadurch gekennzeichnet, dass** der Querträger (2) aus einem warmumgeformten und pressgehärteten Stahl hergestellt ist, insbesondere mit einer Zugfestigkeit Rm größer 1350MPa.

10. Stoßfängeranordnung (1) nach einem der vorgenannten Ansprüche, **dadurch gekennzeichnet, dass** eine Öffnung (12, 13) der vorderen und/oder hinteren Aufnahmeebene als Spielpassung zu der Hülse (5) ausgebildet ist.
